(19)

Europäisches
Patentamt

European
Patent Office

Office européen
des brevets

(11)  **EP 4 495 549 A1**

(12)  **EUROPEAN PATENT APPLICATION**
published in accordance with Art. 153(4) EPC

<table>
<tr><td>(43) Date of publication:<br>    **22.01.2025 Bulletin 2025/04**</td><td>(51) International Patent Classification (IPC):<br>    ***G01C 21/20*** (2006.01)    ***G01S 17/89*** (2020.01)</td></tr>
<tr><td>(21) Application number: **23770573.6**</td><td rowspan="2">(52) Cooperative Patent Classification (CPC):<br>    **G01C 21/20; G01S 17/89**</td></tr>
<tr><td>(22) Date of filing: **08.03.2023**</td></tr>
<tr><td></td><td>(86) International application number:<br>    **PCT/JP2023/008792**</td></tr>
<tr><td></td><td>(87) International publication number:<br>    **WO 2023/176617 (21.09.2023 Gazette 2023/38)**</td></tr>
</table>

<table>
<tr><td>(84) Designated Contracting States:<br>    **AL AT BE BG CH CY CZ DE DK EE ES FI FR GB**<br>    **GR HR HU IE IS IT LI LT LU LV MC ME MK MT NL**<br>    **NO PL PT RO RS SE SI SK SM TR**<br>Designated Extension States:<br>    **BA**<br>Designated Validation States:<br>    **KH MA MD TN**</td><td>(71) Applicants:<br>  • **Pioneer Corporation**<br>    **Tokyo 113-0021 (JP)**<br>  • **Pioneer Smart Sensing Innovations Corporation**<br>    **Tokyo 113-0021 (JP)**</td></tr>
<tr><td>(30) Priority: **14.03.2022 JP 2022039388**</td><td>(72) Inventor: **KATO Masahiro**<br>    **Kawagoe-shi, Saitama 350-8555 (JP)**<br><br>(74) Representative: **Vossius & Partner**<br>    **Patentanwälte Rechtsanwälte mbB**<br>    **Siebertstrasse 3**<br>    **81675 München (DE)**</td></tr>
</table>

(54)  **POSITION ESTIMATION DEVICE, POSITION ESTIMATION METHOD, AND PROGRAM**

(57)  A position estimation apparatus (10) includes a first acquisition unit (120), a second acquisition unit (140), an overlapping unit (160), and a first estimation unit (180). The first acquisition unit (120) acquires point cloud data at a plurality of timings obtained by a sensor mounted on a moving body. The second acquisition unit (140) acquires movement information of the moving body. The overlapping unit (160) generates overlapping point cloud data in which the point cloud data at the plurality of timings has been overlapped on the basis of the movement information. The first estimation unit (180) estimates a position of a target object using the overlapping point cloud data.

FIG. 1

EP 4 495 549 A1

**Description**

TECHNICAL FIELD

The present invention relates to a position estimation apparatus, a position estimation method, and a program.

BACKGROUND ART

A technique is known that detects a ground object provided around a vehicle with a radar, a camera, or the like and estimates a position of the vehicle using a detection result.
Patent Documents 1 and 2 disclose a method that estimates a position of a vehicle using a result of detecting a compartment line, such as a white line, provided on a road.

RELATED DOCUMENTS

PATENT DOCUMENTS

Patent Document 1: International Publication No. WO2018/212302
Patent Document 2: International Publication No. WO2019/189098

SUMMARY OF THE INVENTION

TECHNICAL PROBLEM

However, in the techniques of Patent Documents 1 and 2, estimation accuracy strongly depends on the density of data points where the compartment line is detected. That is, in a case where the data points are sparse, the estimation accuracy of the position is reduced.
An example of the problem to be solved by the present invention is to provide a technique that makes it possible to estimate a position of a target object with high accuracy even when data points are sparse.

SOLUTION TO PROBLEM

An invention described in claim 1 is a position estimation apparatus including: a first acquisition unit that acquires point cloud data at a plurality of timings obtained by a sensor mounted on a moving body; a second acquisition unit that acquires movement information of the moving body; an overlapping unit that generates overlapping point cloud data in which the point cloud data at the plurality of timings has been overlapped on the basis of the movement information; and a first estimation unit that estimates a position of a target object using the overlapping point cloud data.
An invention described in claim 12 is a position estimation method executed by a computer. The position estimation method includes: a first acquisition step of acquiring point cloud data at a plurality of timings obtained by a sensor mounted on a moving body; a second acquisition step of acquiring movement information of the moving body; an overlapping step of generating overlapping point cloud data in which the point cloud data at the plurality of timings has been overlapped on the basis of the movement information; and a first estimation step of estimating a position of a target object using the overlapping point cloud data.
An invention described in claim 13 is a program causing a computer to execute the position estimation method according to claim 12.

BRIEF DESCRIPTION OF THE DRAWINGS

Fig. 1 is a diagram illustrating a configuration of a position estimation apparatus according to an embodiment.
Fig. 2 is a diagram illustrating an aspect in which a moving body detects a white line on a road.
Figs. 3A and 3B are diagrams illustrating data points in a first region in a case where a resolution of a sensor is high and in a case where the resolution of the sensor is low, respectively.
Fig. 4 is a flowchart illustrating a flow of a process performed by the position estimation apparatus according to the embodiment.

EP 4 495 549 A1

Fig. 5 is a block diagram illustrating a configuration of a position estimation apparatus according to an example.
Fig. 6 is a flowchart illustrating a flow of a self-position estimation process performed by the position estimation apparatus according to the example.
Fig. 7 is a diagram illustrating a computer for implementing the position estimation apparatus.
Fig. 8 is a diagram illustrating a relationship between reflection intensity before correction and a distance and a relationship between reflection intensity after correction and a distance.
Fig. 9 is a diagram illustrating the overlapping of point cloud data.
Fig. 10 is a diagram illustrating the overlapping of the point cloud data.
Fig. 11 is a diagram illustrating a method by which a coordinate conversion unit performs coordinate conversion on the point cloud data using a velocity v and a yaw angular velocity $\psi'$.
Fig. 12 is a diagram illustrating a method by which the coordinate conversion unit performs the coordinate conversion on the point cloud data using the velocity v, the yaw angular velocity $\psi'$, a roll angular velocity $\varphi'$, and a pitch angular velocity $\Theta'$.
Fig. 13 is a diagram illustrating control of the number of overlaps.
Fig. 14 is a diagram illustrating extraction of a high reflection intensity point.
Fig. 15 is a diagram illustrating the meaning of a second region.
Fig. 16 is a diagram illustrating principal component analysis of a point cloud.
Fig. 17 is a diagram illustrating a detection value of the white line and reliability information.
Fig. 18 is a diagram illustrating the detection value of the white line and reliability information.
Fig. 19 is a diagram illustrating a positional relationship between the moving body and the white line.
Fig. 20 is a flowchart illustrating a flow of a process in S70 illustrated in Fig. 6.

DESCRIPTION OF EMBODIMENTS

Hereinafter, embodiments of the present invention will be described with reference to the drawings. In addition, in all of the drawings, the same components are denoted by the same reference numerals, and a description thereof will not be repeated. In addition, a character in which "·" or "-" is attached to any symbol is referred to as "A'" or "A-" (where "A" is any character) for convenience.

(Embodiment)

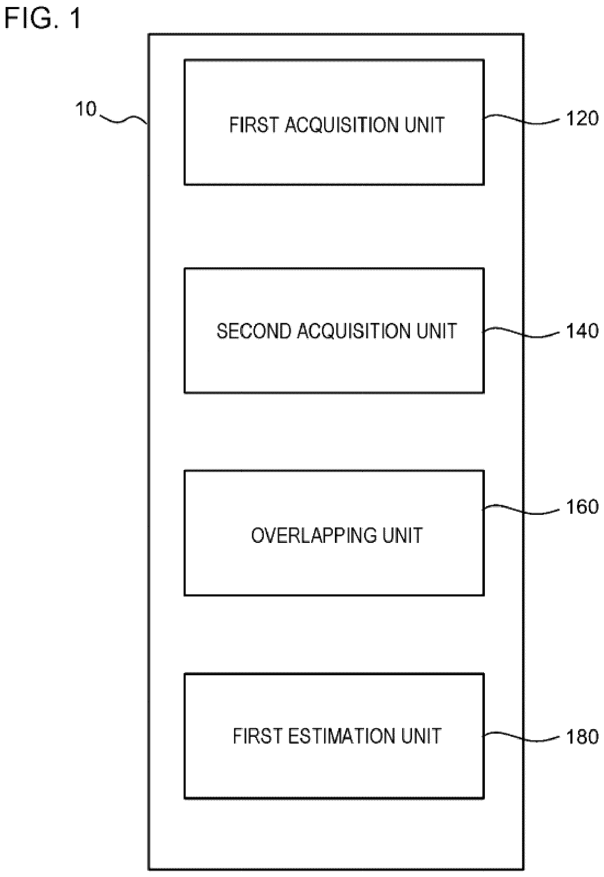

Fig. 1 is a diagram illustrating a configuration of a position estimation apparatus 10 according to an embodiment. The position estimation apparatus 10 according to the present embodiment includes a first acquisition unit 120, a second acquisition unit 140, an overlapping unit 160, and a first estimation unit 180. The first acquisition unit 120 acquires point cloud data at a plurality of timings obtained by a sensor mounted on a moving body. The second acquisition unit 140 acquires movement information of the moving body. The overlapping unit 160 generates overlapping point cloud data in which the point cloud data at the plurality of timings has been overlapped on the basis of the movement information. The first estimation unit 180 estimates the position of a target object using the overlapping point cloud data. In addition, the point cloud data at the plurality of timings is, for example, point cloud data at a plurality of time points.
In the moving body such as a vehicle, it is important to accurately identify the position of the moving body in order to allow route navigation, autonomous driving, driving assistance, and the like to function with high accuracy. When the moving body travels on a road, the position of the moving body at a certain time point and the movement velocity or movement direction of the moving body up to the next time point are used to estimate the position of the moving body at the next time point. Here, correction for further increasing the accuracy of estimating the position of the moving body can be performed by detecting an object (target object) around the moving body with a sensor or the like and collating the detected position with the position of the object in the map information. However, in order to improve the estimation accuracy of the moving body, it is necessary to estimate the position of the target object with high accuracy using the detection result by the sensor.
In the present embodiment, the target object whose position is to be estimated is a line on a road surface. Specifically, the target object is a compartment line on the road surface and is a broken line. The color of the line, which is the target object, is not particularly limited and is, for example, yellow or white. It is preferable that the surface of the target object is formed of a retroreflective material.

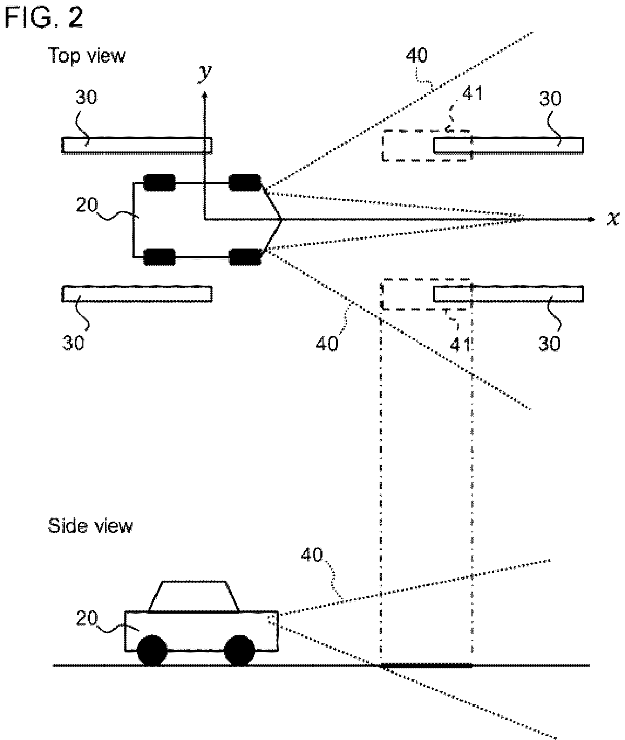

Fig. 2 is a diagram illustrating an aspect in which the moving body 20 detects a white line 30 on the road. The sensor mounted on the moving body 20 measures a region inside a measurement region 40. The position estimation apparatus 10 extracts measurement data in a first region 41 in the measurement region 40 and uses the extracted measurement data to detect the white line 30, which will be described in detail below.
In the present embodiment, the sensor emits light and receives reflected light reflected by the target object to measure the distance to the target object. The sensor is not particularly limited and is a radar, Laser Imaging Detection and

3

Ranging or Laser Illuminated Detection and Ranging (LIDAR), Light Detection and Ranging (LiDAR), or the like. The light emitted from the sensor is not particularly limited and is, for example, infrared light. In addition, the light emitted from the sensor is, for example, a laser pulse. The sensor calculates the distance from the sensor to the target object by using, for example, the time from the emission of pulsed light to the reception of reflected light of the pulsed light and a propagation velocity of the pulsed light. The emission direction of the light from the sensor is variable, and the inside of the measurement region 40 is scanned by sequentially performing measurement in a plurality of emission directions.

The sensor outputs point cloud data in which the three-dimensional position of a reflection point of light and reflection intensity (that is, the light-receiving intensity in the sensor) are associated with each other. The first acquisition unit 120 of the position estimation apparatus 10 acquires the point cloud data. The point cloud data output from the sensor is configured in units of frames. One frame is composed of data obtained by scanning the measurement region 40 once. The sensor repeatedly scans the inside of the measurement region 40 to generate a plurality of consecutive frames. For example, the distance to the target object present in each angular direction can be measured by moving the emission light in a vertical direction while reciprocating in a horizontal direction. Therefore, it is possible to obtain data of three-dimensional information within a scanning range in the horizontal direction and the vertical direction.

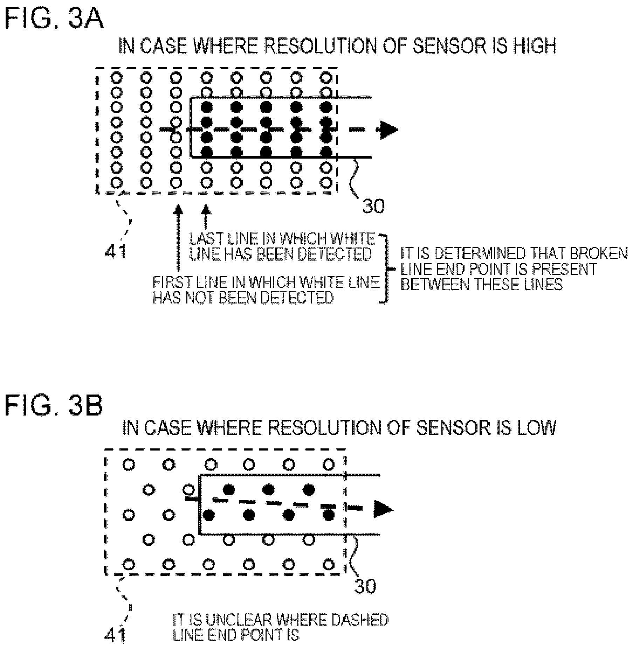

Figs. 3A and 3B are diagrams illustrating data points in the first region 41 in a case where the resolution of the sensor is high and in a case where the resolution of the sensor is low, respectively. In each of these Figures, both a white circle and a black circle are data points, and the black circle indicates a higher reflection intensity of light than the white circle. In addition, an image of the direction of the estimated white line 30 is represented by a broken line arrow. For example, since the white line 30 is drawn with the retroreflective material, the white line 30 has a higher reflectance than the surrounding road surface and has a high reflection intensity. Therefore, in the measurement region 40, the first region 41 is provided in a place where the white line 30 is easily detected, and a portion having a high reflection intensity in the first region 41 is detected to recognize the white line 30.

In a case where the resolution of the sensor is high, as illustrated in Fig. 3A, the position of an end portion of the white line 30 and the direction of the white line 30 are clear. When the longitudinal direction of the white line 30 is a vertical direction and the width direction thereof is a horizontal direction, a plurality of points on the white line 30 are obtained for each line in the horizontal direction. Therefore, it is determined whether or not a distance between both end points which detect the white line 30 is about the same as the width of the white line 30, a center point of each line is calculated, and the center points are connected to calculate a center line of the white line 30. In addition, it can be determined that an end point of a broken line is present between a line in which the point on the white line 30 has been detected and a line in which the point on the white line 30 has not been detected.

On the other hand, as illustrated in Fig. 3B, in a case where the resolution of the sensor is low, it is not possible to clearly identify the position of the end portion of the white line 30 or the direction of the white line 30 from only the data of one frame. First, since the acquired point cloud is sparse, it is difficult to determine whether or not the point is a point on the white line 30 by comparison with the width of the white line 30. For example, even in a case where it can be determined that the point is a point on the white line 30, it is not possible to accurately calculate the average position of each line. Therefore, it is not possible to generate the center line. In addition, since the contrast between the line in which the white line 30 has been detected and the line in which the white line 30 has not been detected is low, it is difficult to known where the end point of the broken line is.

According to the position estimation apparatus 10 of the present embodiment, the overlapping unit 160 generates the overlapping point cloud data in which the point cloud data at a plurality of timings has been overlapped on the basis of the movement information. Then, the first estimation unit 180 estimates the position of the target object using the overlapping point cloud data. Therefore, even when the data points obtained in each frame are sparse, it is possible to generate the overlapping point cloud data in which data points are dense and to estimate the position of the target object, such as a line on the road, with high accuracy.

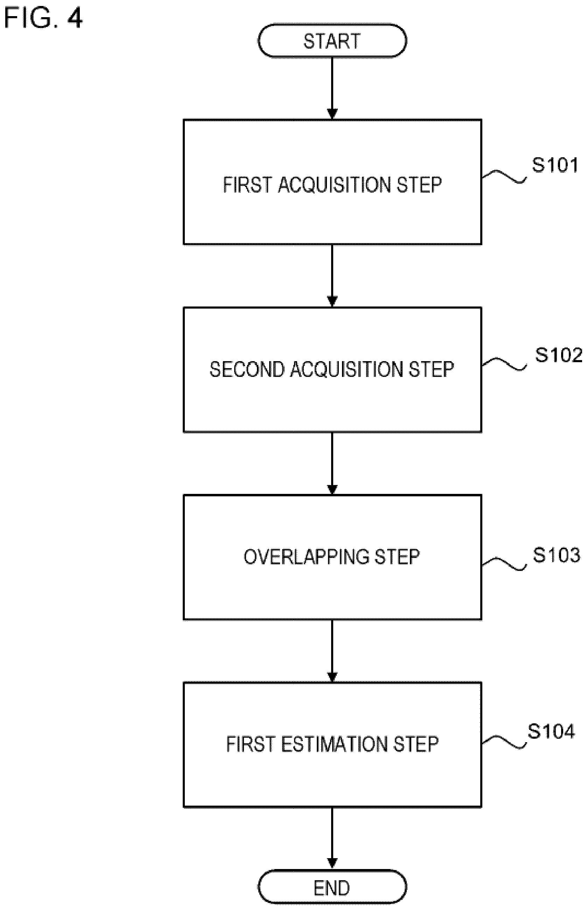

Fig. 4 is a flowchart illustrating a flow of a process performed by the position estimation apparatus 10 according to the present embodiment. A position estimation method according to the present embodiment is executed by a computer. The position estimation method according to the present embodiment includes a first acquisition step S101, a second acquisition step S102, an overlapping step S103, and a first estimation step S104. In the first acquisition step S101, the point cloud data at a plurality of timings obtained by the sensor mounted on the moving body is acquired. In the second acquisition step S102, the movement information of the moving body is acquired. In the overlapping step S103, the overlapping point cloud data in which the point cloud data at the plurality of timings has been overlapped on the basis of the movement information is generated. In the first estimation step S104, the position of the target object is estimated using the overlapping point cloud data.

(Example)

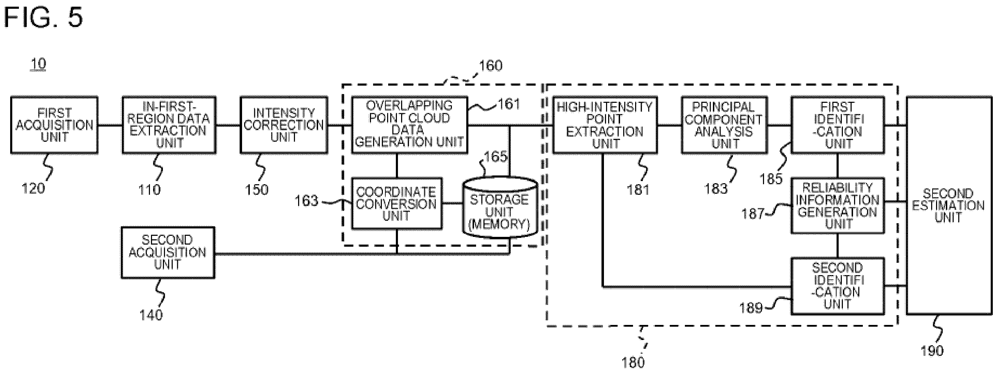

Fig. 5 is a block diagram illustrating a configuration of a position estimation apparatus 10 according to an example. The position estimation apparatus 10 according to the present example has the configuration of the position estimation apparatus 10 according to the embodiment. The position estimation apparatus 10 according to the present example further includes an in-first-region data extraction unit 110, an intensity correction unit 150, and a second estimation unit 190. The overlapping unit 160 according to the present example includes an overlapping point cloud data generation unit 161, a coordinate conversion unit 163, and a storage unit 165. The first estimation unit 180 according to the present example includes a high-intensity point extraction unit 181, a principal component analysis unit 183, a first specification unit 185, a reliability information generation unit 187, and a second specification unit 189. Details will be described below.

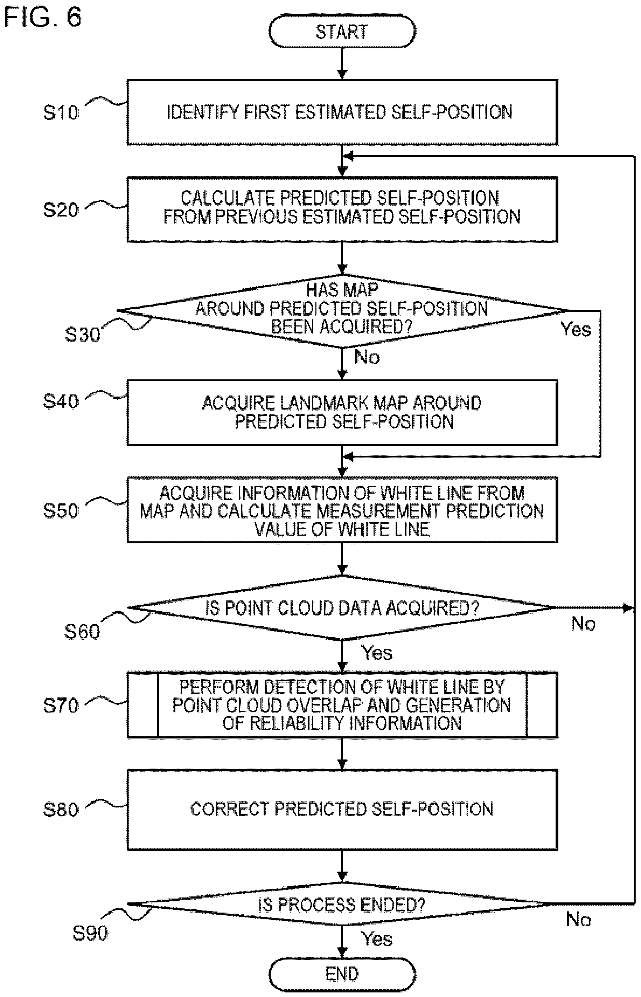

Fig. 6 is a flowchart illustrating a flow of a self-position estimation process performed by the position estimation apparatus 10 according to the example. The second estimation unit 190 estimates the position of the moving body 20 using the estimation result of the position of the target object by the first estimation unit 180. An overall flow of the process for estimating the position of the moving body 20 performed by the position estimation apparatus 10 will be described with reference to this figure. Hereinafter, the target object will be described as a white line. However, the target object may be an object other than the white line. In addition, the sensor will be described as a LiDAR. However, the sensor may be other types.

When the operation of the position estimation apparatus 10 is started, the position estimation apparatus 10 first identifies the first estimated self-position (S10). Specifically, the second estimation unit 190 uses, as the first estimated self-position, a positioning result by a global navigation satellite system (GNSS) provided in the moving body 20 or the position estimation apparatus 10. Then, the second estimation unit 190 calculates the latest predicted self-position using the previous estimated self-position (S20). Specifically, the second estimation unit 190 acquires the velocity and yaw angular velocity of the moving body 20 from a velocity sensor and a gyro sensor provided in the moving body 20 and identifies the movement direction and movement amount of the moving body 20 from the previous estimated self-position. Then, the second estimation unit 190 calculates, as the predicted self-position, a position after movement in a case where the moving body is moved in the identified movement direction and by the identified movement amount from the previous estimated self-position.

Then, the second estimation unit 190 determines whether or not the map around the predicted self-position has already been acquired (S30). In a case where the map has already been acquired (Yes in S30), the second estimation unit 190 performs a process in S50 without performing a process in S40. In a case where the map has not been acquired yet (No in S30), the second estimation unit 190 acquires a landmark map around the predicted self-position (S40). The second estimation unit 190 may read out the landmark map from a storage unit that can be accessed by the second estimation unit 190 to acquire the landmark map or may acquire the landmark map from the outside via a network. The storage unit that can be accessed by the second estimation unit 190 may be provided inside the position estimation apparatus 10 or may be provided outside the position estimation apparatus 10.

Then, the second estimation unit 190 acquires information of the white line at the distance that can be detected by the LiDAR from the moving body 20 from the map and calculates a measurement prediction value of the white line (S50). The measurement prediction value is a prediction value of how the white line is measured as viewed from the moving body 20. Specifically, the second estimation unit 190 identifies the information of the white line at the distance that can be detected from the moving body 20 in the landmark map. Then, the measurement prediction value of the white line is calculated on the basis of the position and orientation of the white line in the landmark map and the predicted self-position.

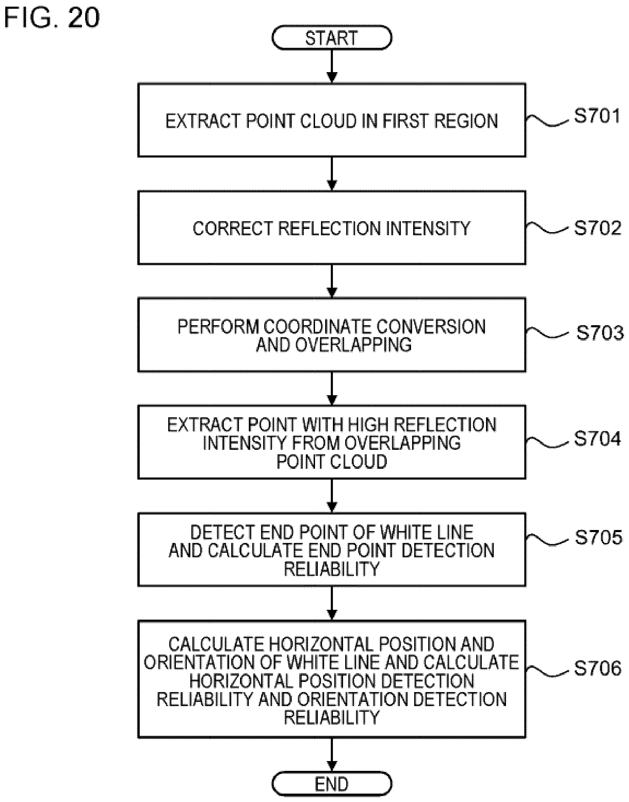

Then, the first acquisition unit 120 determines whether or not the point cloud data has been acquired (S60). In a case where the point cloud data has not been acquired, for example, in a case where occlusion caused by another vehicle or the like occurs (No in S60), the process returns to S20. In a case where the point cloud data has been acquired by the first acquisition unit 120 (Yes in S60), the detection of the white line by point cloud overlap and the generation of the reliability information are performed in S70. S70 will be described in detail below with reference to Fig. 20.

When the information indicating the position and direction of the white line and the reliability information are generated in S70, the second estimation unit 190 corrects the predicted self-position calculated in S20 using the information (S80). A method of using the predicted self-position for the correction is not particularly limited. For example, an extended Kalman filtering process can be used. Then, the second estimation unit 190 sets the corrected predicted self-position as the latest estimated self-position. The estimated self-position may be output to an apparatus other than the position estimation apparatus 10 or may be stored in a storage device that can be accessed by the second estimation unit 190. The estimated self-position can be used for functions such as the navigation of a route or the like, autonomous driving, and driving assistance.

Then, the second estimation unit 190 determines whether or not an end condition is satisfied (S90). A case where the end condition is satisfied is, for example, a case where the operation of the moving body 20 is stopped or a case where an operation of stopping the estimation process by the position estimation apparatus 10 is performed. In a case where the end condition is satisfied (Yes in S90), the position estimation apparatus 10 ends the process. In a case where the end condition is not satisfied (No in S90), the process returns to S20.

A hardware configuration of the position estimation apparatus 10 will be described below. Each functional component of the position estimation apparatus 10 may be implemented by hardware (for example, a hard-wired electronic circuit) for implementing each functional component or may be implemented by a combination of hardware and software (for example, a combination of an electronic circuit and a program for controlling the electronic circuit). Hereinafter, a case where each functional component of the position estimation apparatus 10 is implemented by a combination of hardware and software will be further described.

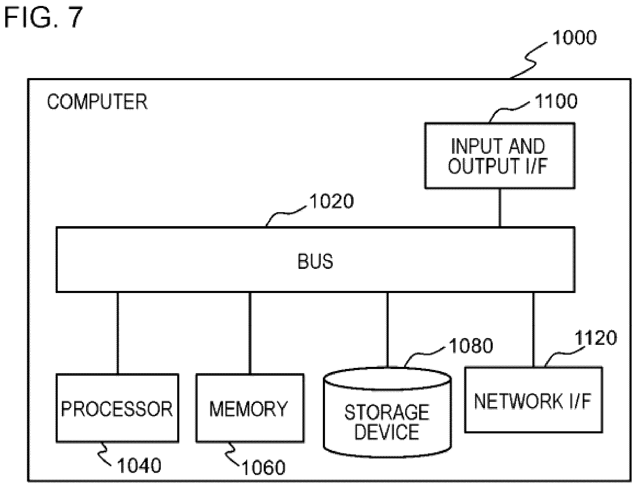

Fig. 7 is a diagram illustrating a computer 1000 for implementing the position estimation apparatus 10. The computer 1000 is any computer. For example, the computer 1000 is a system-on-chip (SoC), a personal computer (PC), a server machine, a tablet terminal, a smartphone, or the like. The computer 1000 may be a dedicated computer designed to implement the position estimation apparatus 10 or may be a general-purpose computer.

The computer 1000 includes a bus 1020, a processor 1040, a memory 1060, a storage device 1080, an input and output interface 1100, and a network interface 1120. The bus 1020 is a data transmission path for the processor 1040, the memory 1060, the storage device 1080, the input and output interface 1100, and the network interface 1120 to transmit and receive data to and from each other. However, a method for connecting the processor 1040 and the like to each other is not limited to bus connection. The processor 1040 may be any one of various processors such as a central processing unit (CPU), a graphics processing unit (GPU), and a field-programmable gate array (FPGA). The memory 1060 is a main storage device implemented using a random access memory (RAM) or the like. The storage device 1080 is an auxiliary storage device implemented using a hard disk, a solid state drive (SSD), a memory card, a read only memory (ROM), or the like.

The input and output interface 1100 is an interface for connecting the computer 1000 to input and output devices. For example, an input device, such as a keyboard, or an output device, such as a display, is connected to the input and output interface 1100.

The network interface 1120 is an interface for connecting the computer 1000 to a network. The communication network is, for example, a local area network (LAN) or a wide area network (WAN). A method for connecting the network interface 1120 to the network may be a wireless connection or a wired connection.

The storage device 1080 stores a program module that implements each functional component of the position estimation apparatus 10. The processor 1040 reads out each of these program modules into the memory 1060 and executes the program modules to implement functions corresponding to each program module.

Each of the components of the position estimation apparatus 10 will be described in detail below. The first acquisition unit 120 acquires the point cloud data generated by the LiDAR. The first acquisition unit 120 may acquire the point cloud data that has been generated by the LiDAR and stored in the storage unit or may directly acquire the point cloud data from the LiDAR. The first acquisition unit 120 acquires the point cloud data of a plurality of frames in the order in which the point cloud data has been generated.

<Extraction of Data Points in First Region>

The in-first-region data extraction unit 110 extracts data points in the first region 41 from the point cloud data acquired by the first acquisition unit 120. The subsequent processes are performed on the extracted data points in the first region 41. The first region 41 is a region in which the white line 30 is highly likely to be present, and the position and size thereof with respect to the moving body 20 are determined in advance. The first regions 41 are provided on the left and right of the front and rear of the moving body 20. That is, the first regions 41 are provided in a total of four places. The process is performed on each first region 41.

<Intensity Correction>

As described above, the intensity of the reflected light received by the LiDAR is associated with each data point included in the point cloud data acquired by the first acquisition unit 120. Then, the first estimation unit 180 estimates the position of the white line using the intensities of a plurality of data points in the overlapping point cloud data, which will be described below. Here, the intensity correction unit 150 corrects the intensity of each data point included in the point cloud data or the overlapping point cloud data using the distance of the data point. The first estimation unit 180 estimates the position of the white line using the corrected intensity.

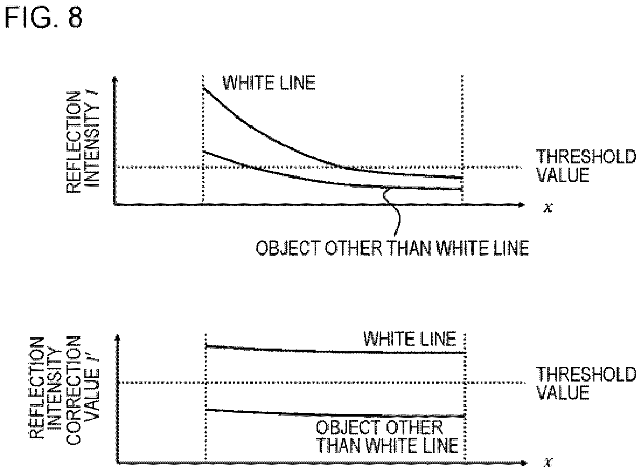

Fig. 8 is a diagram illustrating a relationship between the reflection intensity before the correction and the distance and a relationship between the reflection intensity after the correction and the distance. An upper graph of this figure illustrates the relationship between the reflection intensity before the correction and the distance, and a lower graph of this figure illustrates the relationship between the reflection intensity after the correction and the distance. The white line drawn with the retroreflective material has a high reflection intensity. Therefore, data having a high reflection intensity in the first region 41 can be selected to extract points on the white line. However, the intensity of light used for measurement by the LiDAR decreases as the distance increases. Specifically, the intensity of the reflected light is inversely proportional to the square of the distance. Therefore, as illustrated in the upper graph of this figure, it is difficult to perform the extraction for all of the point cloud data in the first region 41 using a constant reflection intensity threshold value. Even when the extraction can be performed, it is not easy to set the threshold value. Therefore, the intensity correction unit 150 corrects reflection intensity I using the square of a distance r to a detection point. Specifically, the intensity correction unit 150 calculates a reflection intensity correction value I' (reflection intensity after correction) on the basis of a relationship of I' = A $\times$ r$^2$ $\times$ I. In addition, A is a predetermined coefficient. As illustrated in the lower graph of this figure, the influence of the distance on the detected intensity is removed by this correction. Therefore, it is possible to extract a high reflection intensity point (also referred to as a "high-intensity point") with a constant threshold value for the corrected intensity.

The intensity correction unit 150 acquires the information of the extracted data points in the first region 41 from the in-first-region data extraction unit 110 and corrects the reflection intensity as described above.

<Point Cloud Overlap>

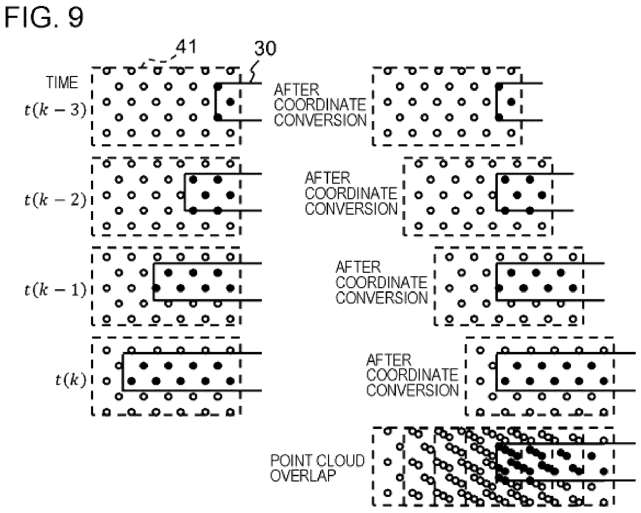

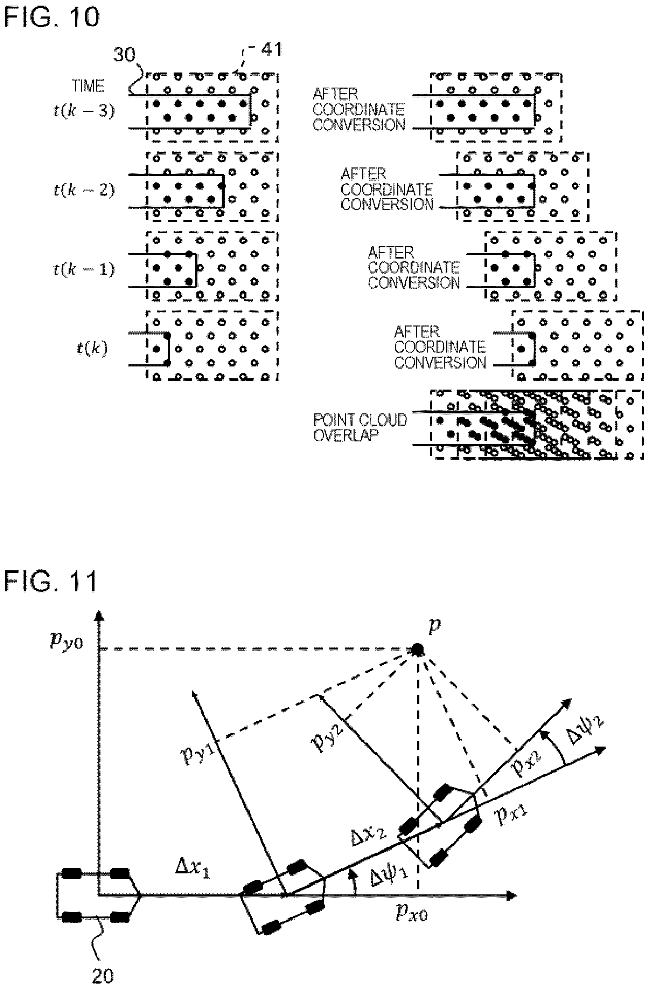

Figs. 9 and 10 are diagrams illustrating the overlap of the point cloud data. In these figures, both a white circle and a black circle are data points, and the black circle indicates a higher reflection intensity of light than the white circle. Fig. 9 illustrates a case where an end point of the white line 30 enters the first region 41. Fig. 10 illustrates a case where the end point of the white line 30 moves out of the first region 41. The position estimation apparatus 10 includes a shift amount identification unit that identifies an amount of shift using the movement information. In the example in Fig. 5, the coordinate conversion unit 163 functions as the shift amount identification unit. The overlapping unit 160 generates the overlapping point cloud data using the amount of shift. Here, the movement information is information related to the movement of the moving body between the timings when a plurality of point cloud data items overlapped in the overlapping point cloud data are acquired.

The overlapping unit 160 overlaps the point cloud data at a plurality of time points to generate the overlapping point cloud data. Here, at the time of the overlapping, the coordinate conversion is performed on the point cloud according to the movement amount and orientation change of the vehicle. Specifically, the process is as follows. The overlapping point cloud data generated by the overlapping point cloud data generation unit 161 is temporarily stored in the storage unit 165. The storage unit 165 is a memory and is implemented by the memory 1060 of the computer 1000. The coordinate conversion unit 163 reads out the previous overlapping point cloud data from the storage unit 165 and performs the coordinate conversion on the data. The overlapping point cloud data generation unit 161 acquires the point cloud data in which the corrected reflection intensity has been associated with each point from the intensity correction unit 150. The overlapping point cloud data generation unit 161 overlaps the latest point cloud data with the overlapping point cloud data subjected to the coordinate conversion which has been acquired from the coordinate conversion unit 163. The latest overlapping point cloud data obtained in this way is output to the first estimation unit 180 and is stored in the storage unit 165.

<<Coordinate Conversion>>

The coordinate conversion unit 163 performs the coordinate conversion using the movement information acquired by the second acquisition unit 140. The movement information includes at least a velocity v and a yaw angular velocity $\psi'$ of the moving body 20. The movement information may further include a roll angular velocity $\varphi'$ and a pitch angular velocity $\Theta'$. The second acquisition unit 140 can acquire the movement information from a velocity sensor and an angular velocity sensor provided in the moving body 20. Alternatively, the second acquisition unit 140 may calculate the velocity v from a change in the estimated self-position over time. In addition, the yaw angular velocity $\psi'$ may be a yaw rate output of an inertial measurement unit (IMU) mounted on the moving body 20 or may be derived from a change in the yaw angle of the self-position estimation result over time.

Fig. 11 is a diagram illustrating a method by which the coordinate conversion unit 163 performs the coordinate conversion on the point cloud data using the velocity v and the yaw angular velocity $\psi'$. In a case where the moving body 20 is moved as illustrated in this figure, the coordinate conversion is performed on the point cloud data at the previous time point according to the movement amount or the orientation change of the moving body 20. As a result, the point cloud data can be represented as data in a moving body coordinate system after the movement. In a case where a point p is a target, the coordinate conversion can be performed according to the following Expressions (1) and (2). Here, when a time interval is $\Delta t$, a movement amount $\Delta x$ of the moving body 20 in the traveling direction and an orientation change $\Delta\psi$ can be represented by $\Delta x = v\Delta t$ and $\Delta\psi = \psi'\Delta t$, respectively. In addition, since changes in roll and pitch are small, the changes do not have a great effect even when the changes are not added as coordinate conversion parameters for point cloud overlap.

[Equation 1]

$$\begin{bmatrix} p_{x1} \\ p_{y1} \\ p_{z1} \end{bmatrix} = \begin{bmatrix} \cos \Delta\psi_1 & \sin \Delta\psi_1 & 0 \\ -\sin \Delta\psi_1 & \cos \Delta\psi_1 & 0 \\ 0 & 0 & 1 \end{bmatrix} \begin{bmatrix} p_{x0} - \Delta x_1 \\ p_{y0} \\ p_{z0} \end{bmatrix} \qquad \cdots (1)$$

[Equation 2]

$$\begin{bmatrix} p_{x2} \\ p_{y2} \\ p_{z2} \end{bmatrix} = \begin{bmatrix} \cos \Delta \psi_2 & \sin \Delta \psi_2 & 0 \\ -\sin \Delta \psi_2 & \cos \Delta \psi_2 & 0 \\ 0 & 0 & 1 \end{bmatrix} \begin{bmatrix} p_{x1} - \Delta x_2 \\ p_{y1} \\ p_{z1} \end{bmatrix} \quad \cdots (2)$$

When the result of Expression (1) is substituted into Expression (2), the point cloud data at the time point before the previous time point can also be represented in the current moving body coordinate system. In this case, it can be seen that the information of $\Delta\psi_1$ and $\Delta x_1$ is no longer required at the time point when the result of Expression (1) is obtained. That is, the coordinate conversion unit 163 can perform the coordinate conversion using the movement amount and the orientation change from the previous data each time to overlap the necessary amount of past point cloud data.

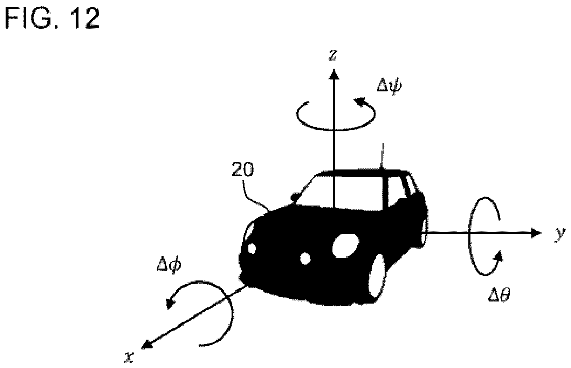

Fig. 12 is a diagram illustrating a method by which the coordinate conversion unit 163 performs the coordinate conversion on the point cloud data using the velocity v, the yaw angular velocity $\psi'$, the roll angular velocity $\varphi'$, and the pitch angular velocity $\Theta'$. In a case where the roll angular velocity $\varphi'$ and the pitch angular velocity $\theta'$ can be known, the coordinate conversion can be performed also considering them to perform more accurate point cloud overlap. As illustrated in this figure, when a change in the roll angle about the x-axis is $\Delta\varphi$, a change in the pitch angle about the y-axis is $\Delta\theta$, and a change in the yaw angle about the z-axis is $\Delta\psi$, the coordinate conversion can be performed by the following Expressions (3) and (4) using three rotation matrices. The x-axis is the traveling direction of the moving body 20, the z-axis is a vertical upward direction, and the y-axis is a direction perpendicular to the x-axis and the z-axis. Here, the movement amount and each orientation change are represented by $\Delta x = v\Delta t$, $\Delta\varphi = \varphi'\Delta t$, $\Delta\theta = \theta'\Delta t$, and $\Delta\psi = \psi'\Delta t$ using the velocity v, the roll angular velocity $\varphi'$, the pitch angular velocity $\Theta'$, the yaw angular velocity $\psi'$ of the moving body 20, and the time interval $\Delta t$. The second acquisition unit 140 can acquire the roll angular velocity $\varphi'$ and the pitch angular velocity $\theta'$ from the roll rate output and the pitch rate output of the IMU mounted on the moving body 20, respectively.

[Equation 3]

$$\begin{bmatrix} p_{x1} \\ p_{y1} \\ p_{z1} \end{bmatrix} = \begin{bmatrix} 1 & 0 & 0 \\ 0 & \cos \Delta\phi_1 & \sin \Delta\phi_1 \\ 0 & -\sin \Delta\phi_1 & \cos \Delta\phi_1 \end{bmatrix} \begin{bmatrix} \cos \Delta\theta_1 & 0 & -\sin \Delta\theta_1 \\ 0 & 1 & 0 \\ \sin \Delta\theta_1 & 0 & \cos \Delta\theta_1 \end{bmatrix} \begin{bmatrix} \cos \Delta\psi_1 & \sin \Delta\psi_1 & 0 \\ -\sin \Delta\psi_1 & \cos \Delta\psi_1 & 0 \\ 0 & 0 & 1 \end{bmatrix} \begin{bmatrix} p_{x0} - \Delta x_1 \\ p_{y0} \\ p_{z0} \end{bmatrix}$$

$$\cdots (3)$$

[Equation 4]

$$\begin{bmatrix} p_{x2} \\ p_{y2} \\ p_{z2} \end{bmatrix} = \begin{bmatrix} 1 & 0 & 0 \\ 0 & \cos \Delta\phi_2 & \sin \Delta\phi_2 \\ 0 & -\sin \Delta\phi_2 & \cos \Delta\phi_2 \end{bmatrix} \begin{bmatrix} \cos \Delta\theta_2 & 0 & -\sin \Delta\theta_2 \\ 0 & 1 & 0 \\ \sin \Delta\theta_2 & 0 & \cos \Delta\theta_2 \end{bmatrix} \begin{bmatrix} \cos \Delta\psi_2 & \sin \Delta\psi_2 & 0 \\ -\sin \Delta\psi_2 & \cos \Delta\psi_2 & 0 \\ 0 & 0 & 1 \end{bmatrix} \begin{bmatrix} p_{x1} - \Delta x_2 \\ p_{y1} \\ p_{z1} \end{bmatrix}$$

$$\cdots (4)$$

<<Control of Number of Overlaps>>

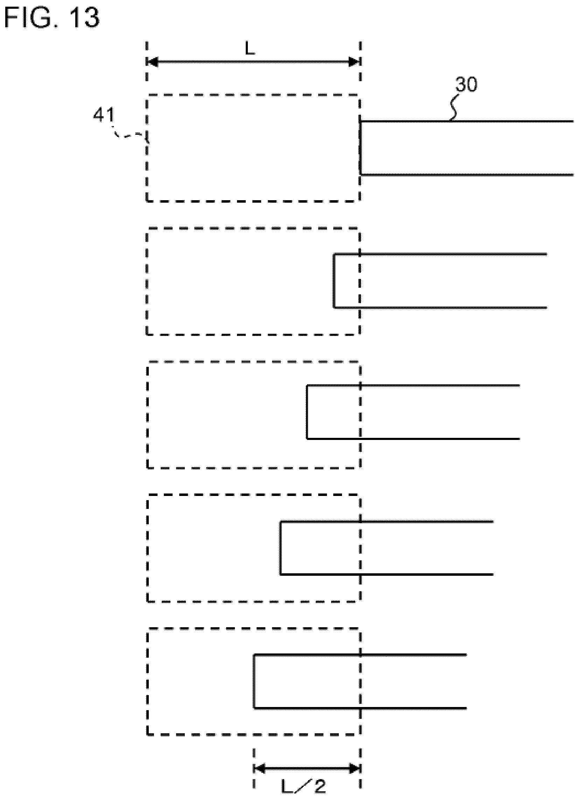

Fig. 13 is a diagram illustrating control of the number of overlaps. In the present example, the overlapping unit 160 generates the overlapping point cloud data in which the point cloud data has been overlapped the number of times depending on the velocity of the moving body 20. That is, the number (the number of frames) of point cloud data items depending on the velocity of the moving body 20 is overlapped. As the number of overlaps increases, the number of point cloud data items increases. Therefore, the number of points on the white line 30 also increases, which makes it easier to detect the points. On the other hand, when the number of overlaps is too large, it is difficult to know a broken line end point. A state is needed in which the boundary of the high reflection intensity point can be ascertained in the overlapping point cloud data, in order to calculate the broken line end point of the white line 30. Therefore, it is preferable to control the number of overlaps such that the boundary of the broken line end point can be recognized, in order to accurately detect the end point.

For example, in a case where the length of the first region 41 in the traveling direction is L, when a plurality of point cloud overlaps are within a movement range of up to L/2, the point cloud data in which a broken line portion of the white line 30 is located in the first region 41 is always present among a plurality of point cloud data items overlapped with each other. Therefore, the coordinate conversion unit 163 calculates m on the basis of a relationship of m = (L/2)/v/T = L/(2vT), using the length L of the first region 41, the velocity v of the moving body 20, and the frame cycle T of the LiDAR. Then, the coordinate conversion unit 163 identifies the maximum integer that does not exceed m as the number of overlaps C. For example, in a case of L = 10 [m], v = 27.8 [m/s] (= 100 [km/h]), and T = 42 [ms], m = 10/(2 × 27.8 × 0.042) = 4.28 is established. Therefore, the number of overlaps C is determined to be 4.

<Extraction of High Reflection Intensity Point and Detection of End Point>

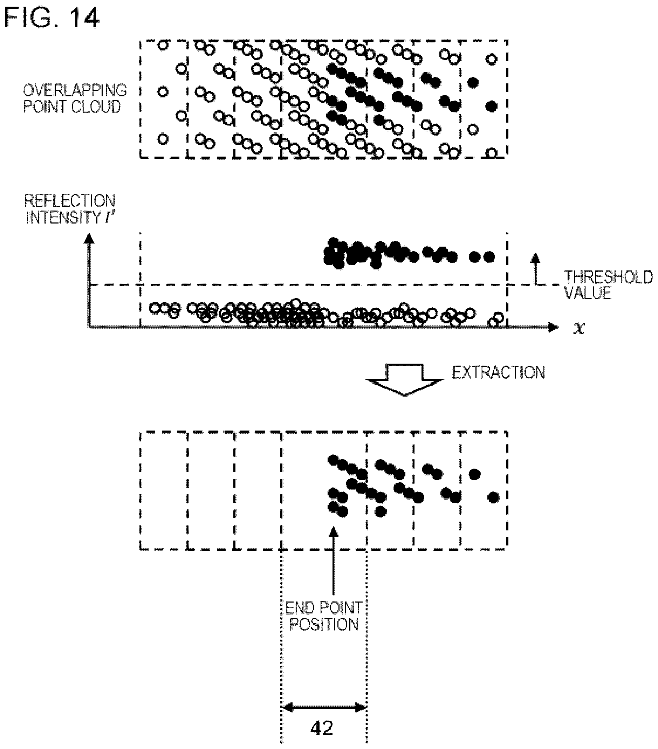

Fig. 14 is a diagram illustrating the extraction of the high reflection intensity point. In this figure, both a white circle and a black circle are data points, and the black circle indicates a higher reflection intensity of light than the white circle. When the first estimation unit 180 acquires the overlapping point cloud data from the overlapping point cloud data generation unit 161, the high-intensity point extraction unit 181 extracts the high-intensity point in the overlapping point cloud data. Specifically, the high-intensity point extraction unit 181 extracts data points having an intensity exceeding a predetermined threshold value in the overlapping point cloud data.

<<Whether or Not to Determine End Point>>

The second identification unit 189 of the first estimation unit 180 estimates an end point position of a line on a road surface. The end point position is a position (x-coordinate) in the x-axis direction and is the position of the end portion of the white line 30 projected onto the x-axis. The second identification unit 189 identifies the position of the minimum or maximum x-coordinate among the x-coordinates of the high-intensity points extracted by the high-intensity point extraction unit 181 as the end point position. Here, the second identification unit 189 determines whether or not the identified end point position is within a predetermined second region 42. In a case where the identified end point position is within the second region 42, the second identification unit 189 uses the identified end point position as the estimation result of the position of the broken line end point of the white line 30. The estimation result of the end point position is used for the position estimation of the moving body 20 in the second estimation unit 190. On the other hand, in a case in which the identified end point position is not in the second region 42, the second identification unit 189 does not use the identified end point position as the estimation result of the position of the broken line end point of the white line 30. That is, in a case where the end point position is within the predetermined second region 42 in the overlapping point cloud data, the second identification unit 189 estimates the end point position using the overlapping point cloud data. The second region 42 is a region including the center of the overlapping point cloud data in the x-axis direction and is a region in which all of the overlapped point cloud data is overlapped. In addition, the width of the second region 42 in the x-axis direction can be calculated by performing the coordinate conversion on the position of the first region 41 used for generating the overlapping point cloud data. That is, in the case of Figs. 9 and 10, in the right diagram after the coordinate conversion, the width of the second region 42 is calculated as a distance interval between the x-coordinate of the position of a front end of the first region 41 at a time t(k - 3) and the x-coordinate of the position of a rear end of the first region 41 at a time t(k). In addition, the coordinate conversion of each position of the first region 41 is performed on the coordinates of the region using Expression (1) and Expression (2), or Expression (3) and Expression (4) in the same manner as the point cloud data.

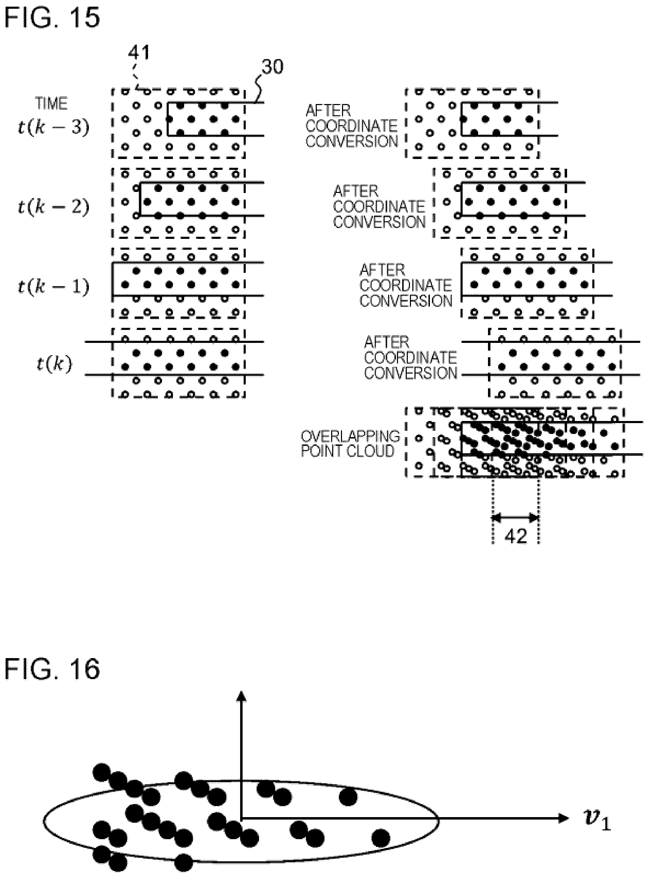

Fig. 15 is a diagram illustrating the meaning of the second region 42. In this figure, both a white circle and a black circle are data points, and the black circle indicates a higher reflection intensity of light than the white circle. When there is a case where the data in the first region 41 does not capture the broken line end point, the amount of data present at the end point position is reduced even though the data is overlapped. In the example illustrated in Fig. 15, only upper two data items have correct data of the end point position. That is, preferably, when the minimum or maximum x-coordinate among the x-coordinates of the high reflection intensity points is separated from a central portion of the overlapping point cloud data, the minimum or maximum x-coordinate is determined to be not appropriate as the end point information and is not adopted. This makes it possible to detect the end point with high accuracy. Therefore, only in a case where the end point of the data point having an intensity exceeding a predetermined threshold value in the overlapping point cloud data is present in the second region 42, the position of the end point is used as the estimation result of the broken line of the white line 30. However, this data can also be used to calculate the horizontal position and orientation of the white line 30, which will be described below.

<Identification of Direction of White Line>

On the other hand, the principal component analysis unit 183 of the first estimation unit 180 performs principal component analysis on the high-intensity point cloud extracted by the high-intensity point extraction unit 181 to calculate an eigenvalue and an eigenvector of each principal component axis. Then, the first identification unit 185 identifies an eigenvector of a principal component axis having the largest eigenvalue as a direction vector of a straight line indicating the direction (longitudinal direction) of the white line 30.

Fig. 16 is a diagram illustrating the principal component analysis of the point cloud. First, the principal component analysis unit 183 calculates a covariance matrix C using N points $[x_i\, y_i\, z_i]^T$ extracted by the high-intensity point extraction unit 181 as in the following Expressions (5) and (6).

[Equation 5]

$$\boldsymbol{\mu} = \begin{bmatrix} \mu_x & \mu_y & \mu_z \end{bmatrix}^T = \begin{bmatrix} \dfrac{1}{N}\displaystyle\sum_{i=1}^{N} x_i & \dfrac{1}{N}\displaystyle\sum_{i=1}^{N} y_i & \dfrac{1}{N}\displaystyle\sum_{i=1}^{N} z_i \end{bmatrix}^T \qquad \cdots (5)$$

[Equation 6]

$$C = \frac{1}{N-1}\sum_{i=1}^{N}\left(\begin{bmatrix} x_i - \mu_x \\ y_i - \mu_y \\ z_i - \mu_z \end{bmatrix}\begin{bmatrix} x_i - \mu_x \\ y_i - \mu_y \\ z_i - \mu_z \end{bmatrix}^T\right) = \begin{bmatrix} \sigma_x^2 & \sigma_{xy} & \sigma_{xz} \\ \sigma_{xy} & \sigma_y^2 & \sigma_{yz} \\ \sigma_{xz} & \sigma_{yz} & \sigma_z^2 \end{bmatrix} \qquad \cdots (6)$$

When an eigenvalue $\lambda$ and an eigenvector v of the covariance matrix C are used, the following Expression (7) is established.
[Equation 7]

$$Cv = \lambda v \qquad \cdots (7)$$

Therefore, the following characteristic equation (8) is solved to calculate an eigenvalue, and an eigenvector can be calculated from the eigenvalue.
[Equation 8]

$$|C - \lambda I| = 0 \qquad \cdots (8)$$

When the eigenvalues that are three solutions of this equation are defined as $\lambda_1$, $\lambda_2$, and $\lambda_3$ in descending order, the eigenvalues mean the variances of the first to third principal component axes. In addition, $v_1$, $v_2$, and $v_3$ calculated by substituting the eigenvalues into Expression (7) are vectors of the first to third principal component axes. Then, the first identification unit 185 identifies $v_1$, which is the vector of the first principal component axis, as the vector in the longitudinal direction of the white line 30. In addition, the first identification unit 185 identifies the orientation of the white line 30 by calculating atan2($v_{1y}$, $v_{1x}$), which is a function of calculating an arctangent, using the value $v_{1x}$ of the x component and the value $v_{1y}$ of the y component of the identified vector of the white line 30 in the longitudinal direction. In addition, $v_2$ which is the vector of the second principal component axis corresponds to the vector in the width direction of the white line 30, and $v_3$ which is the vector of the third principal component axis corresponds to a normal vector to the surface of the white line 30. Here, $\lambda_1$, $\lambda_2$, and $\lambda_3$ correspond to the variance of the point cloud in the longitudinal direction of the white line 30, the variance of the point cloud in the width direction of the white line 30, and the variance of the point cloud in the surface of the white line 30, respectively. In addition, the first identification unit 185 identifies the position of the center of gravity of the point cloud extracted by the high-intensity point extraction unit 181 in the y-axis direction as the horizontal position of the white line 30.

<Generation of Reliability Information>

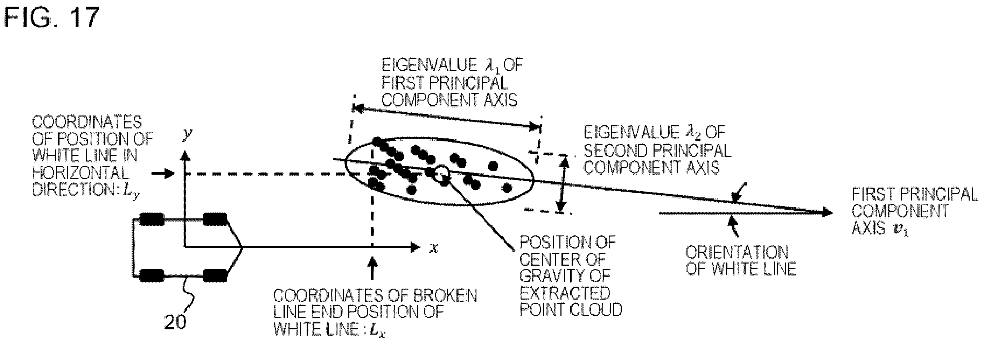

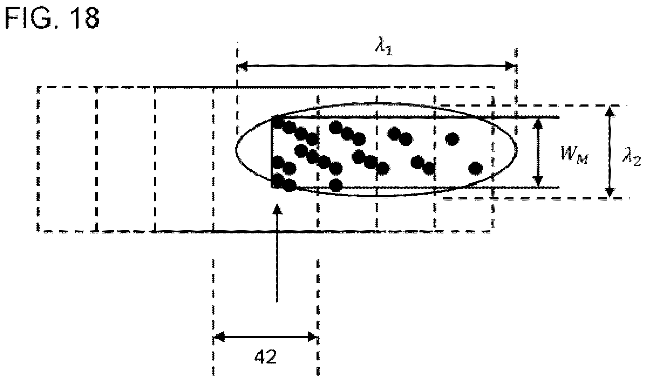

Figs. 17 and 18 are diagrams illustrating the detection value of the white line 30 and reliability information. The reliability information generation unit 187 calculates each detection reliability using the result of the principal component analysis as follows.
The reliability information generation unit 187 identifies an end point detection reliability $r_{Lx}$ such that, as the number of high reflection intensity points n in the second region 42 is larger, the end point detection reliability $r_{Lx}$ is larger. Specifically, the reliability information generation unit 187 calculates the end point detection reliability $r_{Lx}$ on the basis of a relationship of $r_{Lx} = 1 - \exp(-a \times n)$. This expression makes it possible to set $r_{Lx}$ to a value that is equal to or greater than 0 and equal to or less than 1. In addition, a is a predetermined coefficient indicating the sensitivity of n to $r_{Lx}$ and may be adjusted according to the resolution of the sensor.
Further, the reliability information generation unit 187 identifies a horizontal position detection reliability $r_{Ly}$ such that, as the difference between $2 \times 3\sqrt{\lambda_2}$ (= a range of $\pm$ 3 sigma) and the width $W_M$ of the white line acquired from the landmark map is smaller, the horizontal position detection reliability $r_{Ly}$ is larger. Specifically, the reliability information generation unit 187 calculates the horizontal position detection reliability $r_{Ly}$ on the basis of a relationship of $r_{Ly} = \exp(-b \times |2 \times 3\sqrt{\lambda_2} - W_M|)$. This expression makes it possible to set $r_{Ly}$ to a value that is equal to or greater than 0 and equal to or less than 1. Further, b is a predetermined coefficient indicating the sensitivity of $|2 \times 3\sqrt{\lambda_2} - W_M|$ to $r_{Ly}$ and may be adjusted according to the resolution of the sensor.

Moreover, the reliability information generation unit 187 identifies an orientation detection reliability $r_{L\psi}$ such that, as $\sqrt{\lambda_1}$ is larger, the orientation detection reliability $r_{L\psi}$ is larger. In addition, the orientation is the longitudinal direction of the white line 30. Specifically, the reliability information generation unit 187 calculates the orientation detection reliability $r_{L\psi}$ on the basis of a relationship of $r_{L\psi} = 1 - \exp(-c \times \sqrt{\lambda_1})$. This expression makes it possible to set $r_{L\psi}$ to a value that is equal to or greater than 0 and equal to or less than 1. In addition, c is a predetermined coefficient indicating the sensitivity of $\sqrt{\lambda_1}$ to $r_{L\psi}$ and may be adjusted according to the resolution of the sensor.

As described above, the use of the principal component analysis enables application to the extended Kalman filtering process, regardless of the disposition of the data points of the point cloud data, that is, even when the point cloud is not arranged on the line as illustrated in Fig. 3A, but is sparse as illustrated in Fig. 3B.

<Correction of Position of Moving Body>

The second estimation unit 190 acquires the information indicating the end point position of the white line 30 from the second identification unit 189, acquires the information indicating the orientation of the white line 30 and the information indicating the horizontal position of the white line 30 from the first identification unit 185, and acquires the end point detection reliability $r_{Lx}$, the horizontal position detection reliability $r_{Ly}$, and the orientation detection reliability $r_{L\psi}$ from the reliability information generation unit 187. The end point detection reliability $r_{Lx}$, the horizontal position detection reliability $r_{Ly}$, and the orientation detection reliability $r_{L\psi}$ are collectively referred to as reliability information. Then, the second estimation unit 190 performs the extended Kalman filtering process using the acquired information to correct the position of the moving body 20.

<<Generation of Observation Noise Matrix>>

Specifically, the second estimation unit 190 generates an observation noise matrix R(t) represented by the following Expression (9), using the measurement accuracy and reliability information of the white line 30.

[Equation 9]

$$\mathbf{R}(t) = \begin{bmatrix} \dfrac{1}{r_{Lx}(k)} \times \sigma_{Lx}(k)^2 & 0 & 0 \\ 0 & \dfrac{1}{r_{Ly}(k)} \times \sigma_{Ly}(k)^2 & 0 \\ 0 & 0 & \dfrac{1}{r_{L\psi}(k)} \times \sigma_{L\psi}(k)^2 \end{bmatrix}$$

$$\cdots (9)$$

Here, $\sigma_{Lx}(k)$ is the measurement accuracy of the distance to the end point position of the white line 30, $\sigma_{Ly}(k)$ is the measurement accuracy of the distance of the white line 30 in the horizontal direction, and $\sigma_{L\psi}(k)$ is the measurement accuracy of the orientation of the white line 30. The accuracy of the measurement value of the LiDAR deteriorates in proportion to the square of the distance. Therefore, each of $\sigma_{Lx}(k)$, $\sigma_{Ly}(k)$, and $\sigma_{L\psi}(k)$ may be set to a value that is proportional to the square of the distance and can be set to a predetermined value, for example, in a case where the first region 41 is not very large. As can be seen from Expression (9), the reciprocal of each reliability information item is multiplied. Therefore, each element of the noise matrix is smaller as each reliability is larger (closer to 1). Each element of the noise matrix is larger as each reliability is smaller (closer to 0). In addition, when the reliability is 0, a value, such as 0.0001, is used instead of the reliability.

<<Correction of Position of Moving Body>>

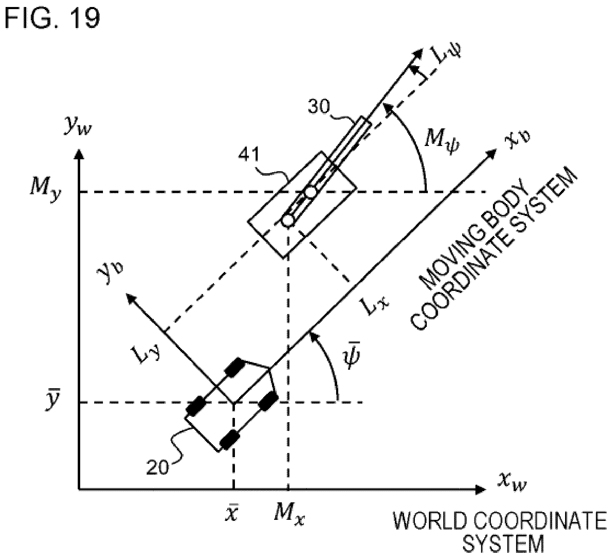

Fig. 19 is a diagram illustrating a positional relationship between the moving body 20 and the white line 30. In this figure, $x_w y_w$ is a world coordinate system, and $x_b y_b$ is a moving body coordinate system based on the moving body 20. An $x_b$-axis direction is the traveling direction of the moving body 20. The measurement value of the white line 30 is expressed by a matrix L(k) represented by the following Expression (10), using the end point position $L_x$(k), horizontal position $L_y$(k), and orientation $L_\psi$(k) of the white line 30 acquired by the second estimation unit 190.

[Equation 10]

$$\mathbf{L}(k) = \begin{bmatrix} L_x(k) \\ L_y(k) \\ L_\psi(k) \end{bmatrix} \qquad \cdots (10)$$

Further, the second estimation unit 190 calculates the measurement prediction value of the white line 30 as described above with reference to S10 to S50 in Fig. 6. The measurement prediction value is expressed by a matrix L-(k) represented by the following Expression (11). As illustrated in Fig. 19, x-(k) and y-(k) are the x-coordinate and y-coordinate of the moving body 20 (predicted self-position) in the world coordinate system, respectively, and ψ-(k) is the angle of the traveling direction of the moving body 20 (predicted self-position) with respect to the $x_w$-axis. In addition, $M_x$, $M_y$, and $M_\psi$ are values representing the information of the white line 30 acquired from the landmark map in the world coordinate system. Further, in a case where white line information stored in the landmark map is represented by a discrete point sequence consisting of information of latitude, longitude, and altitude, the white line information is converted into the world coordinate system such as a Universal Transverse Mercator (UTM) coordinate system or a plane rectangular coordinate system. $M_x$ is the $x_w$-coordinate (end point position) of an end point of a point sequence of the white line 30, $M_y$ is the average value of the $y_w$-coordinates of the point sequence of the white line 30 present in the first region 41, and $M_\psi$ is the angle of the white line 30 calculated as the orientation on the basis of each coordinate of the point sequence of the white line 30.

[Equation 11]

$$\bar{\mathbf{L}}(k) = \begin{bmatrix} \bar{L}_x(k) \\ \bar{L}_y(k) \\ \bar{L}_\psi(k) \end{bmatrix} = \begin{bmatrix} \cos\bar\psi(k) & \sin\bar\psi(k) & 0 \\ -\sin\bar\psi(k) & \cos\bar\psi(k) & 0 \\ 0 & 0 & 1 \end{bmatrix} \begin{bmatrix} M_x - \bar{x}(k) \\ M_y - \bar{y}(k) \\ M_\psi - \bar\psi(k) \end{bmatrix} \qquad \cdots (11)$$

Then, the second estimation unit 190 corrects the predicted self-position using the following Expression (12) and sets the corrected predicted self-position as the estimated self-position. Here, the Kalman gain K(k) is represented by the following Expression (13) using the above-described observation noise matrix R(k), a 3x3 Jacobian matrix H(k) with respect to the measurement prediction value L-(k), and a 3x3 covariance matrix P-(k). When Expression (13) is expressed as a fraction, the observation noise matrix R(k) is located in the denominator. Therefore, it can be seen that, when the observation noise matrix R(k) is large, the Kalman gain K(k) is small. That is, when the reliability information is low, the observation noise matrix R(k) is large, and the Kalman gain K(k) is small. As a result, the amount of correction for the predicted self-position in Expression (12) is small. On the contrary, when the reliability information is high, the observation noise matrix R(k) is not large, and the Kalman gain K(k) is not small. As a result, the amount of correction for the predicted self-position in Expression (12) is appropriate. Therefore, in a case where the measurement value having low accuracy is obtained, inappropriate correction is suppressed. In a case where the measurement value having high accuracy is obtained, appropriate correction is performed. Therefore, it is possible to constantly increase the accuracy of the self-position estimation.

[Equation 12]

$$\begin{bmatrix} \hat{x}(k) \\ \hat{y}(k) \\ \hat\psi(k) \end{bmatrix} = \begin{bmatrix} \bar{x}(k) \\ \bar{y}(k) \\ \bar\psi(k) \end{bmatrix} + \begin{bmatrix} k_{11}(k) & k_{12}(k) & k_{13}(k) \\ k_{21}(k) & k_{22}(k) & k_{23}(k) \\ k_{31}(k) & k_{32}(k) & k_{33}(k) \end{bmatrix} \begin{bmatrix} L_x(k) - \bar{L}_x(k) \\ L_y(k) - \bar{L}_y(k) \\ L_\psi(k) - \bar{L}_\psi(k) \end{bmatrix}$$

$$\cdots (12)$$

[Equation 13]

$$\mathbf{K}(k) = \overline{\mathbf{P}}(k)\mathbf{H}(k)^T\{\mathbf{H}(k)\overline{\mathbf{P}}(k)\mathbf{H}(k)^T + \mathbf{R}(k)\}^{-1} \qquad \cdots(13)$$

Fig. 20 is a flowchart illustrating a flow of the process in S70 illustrated in Fig. 6. When the first acquisition unit 120 acquires the point cloud data, the in-first-region data extraction unit 110 extracts the point cloud data in the first region 41 in S701. Then, in S702, the intensity correction unit 150 corrects the reflection intensity of each data point using the distance measurement value of each data point. Then, in S703, the overlapping unit 160 generates the overlapping point cloud data. Specifically, the coordinate conversion unit 163 calculates the number of overlaps C using the length L of the first region 41, the velocity v of the moving body 20, and the frame cycle T of the LiDAR. Then, the coordinate conversion unit 163 reads out the overlapping point cloud data stored in the storage unit 165 and excludes the data before the past C overlaps. Then, the coordinate conversion unit 163 performs the coordinate conversion on the remaining overlapping data (however, in a case where C is 2, the point cloud data corresponding to one overlap; the same applies below), using, for example, the velocity v and yaw angular velocity ψ' of the moving body 20. The overlapping point cloud data generation unit 161 overlaps the latest point cloud data with the overlapping data subjected to the coordinate conversion to generate overlapping point cloud data. The generated overlapping point cloud data is transmitted to the first estimation unit 180 and is stored in the storage unit 165.

Then, in S704, the high-intensity point extraction unit 181 extracts data points with high reflection intensity from the overlapping point cloud data using a threshold value.

In S705, in a case in which the minimum or maximum x-coordinate among the x-coordinates of the high reflection intensity points is in the second region 42, the second identification unit 189 sets the x-coordinate as the estimation result of the end point position of the white line 30. In addition, the reliability information generation unit 187 calculates the end point detection reliability.

In S706, the principal component analysis unit 183 performs the principal component analysis on the high reflection intensity point cloud to calculate the eigenvalue and eigenvector of each principal component axis. Then, the first identification unit 185 calculates the horizontal position of the white line 30 on the basis of the center point of gravity of the high reflection intensity point cloud and calculates the orientation of the white line 30 from the eigenvector of the first principal component. In addition, the reliability information generation unit 187 calculates the horizontal position detection reliability, using the eigenvalue of the second principal component and the width of the white line 30 read from the landmark map, and calculates the orientation detection reliability from the eigenvalue of the first principal component.

As described above, according to the present embodiment, the same operations and effects as those in the first embodiment can be obtained.

The embodiments and the examples have been described above with reference to the drawings. However, these are examples of the present invention, and various configurations other than the above can also be adopted.

This application claims priority based on Japanese Patent Application No. 2022-039388 filed on March 14, 2022, the disclosure of which is incorporated herein by reference.

REFERENCE SIGNS LIST

10 position estimation apparatus
20 moving body
30 white line
40 measurement region
41 first region
42 second region
110 in-first-region data extraction unit
120 first acquisition unit
140 second acquisition unit
150 intensity correction unit
160 overlapping unit
161 overlapping point cloud data generation unit
163 coordinate conversion unit
165 storage unit
180 first estimation unit
181 high-intensity point extraction unit
183 principal component analysis unit
185 first identification unit

187 reliability information generation unit
189 second identification unit
190 second estimation unit
1000 computer

**Claims**

1. A position estimation apparatus comprising:

   a first acquisition unit that acquires point cloud data at a plurality of timings obtained by a sensor mounted on a moving body;
   a second acquisition unit that acquires movement information of the moving body;
   an overlapping unit that generates overlapping point cloud data in which the point cloud data at the plurality of timings has been overlapped on the basis of the movement information; and
   a first estimation unit that estimates a position of a target object using the overlapping point cloud data.

2. The position estimation apparatus according to claim 1, further comprising:

   a shift amount identification unit that identifies an amount of sift using the movement information,
   wherein the overlapping unit generates the overlapping point cloud data using the amount of shift.

3. The position estimation apparatus according to claim 1 or 2, wherein
   the movement information is information related to a movement of the moving body between timings when a plurality of point cloud data items overlapped in the overlapping point cloud data are acquired.

4. The position estimation apparatus according to any one of claims 1 to 3, wherein
   the sensor emits light and receives reflected light reflected by the target object to measure a distance to the target object.

5. The position estimation apparatus according to claim 4, wherein

   an intensity of the reflected light received by the sensor is associated with each data point included in the point cloud data acquired by the first acquisition unit, and
   the first estimation unit estimates the position of the target object using intensities of a plurality of data points in the overlapping point cloud data.

6. The position estimation apparatus according to claim 5, further comprising:

   an intensity correction unit that corrects the intensity of each data point included in the point cloud data or the overlapping point cloud data using a distance of the data point,
   wherein the first estimation unit estimates the position of the target object using the corrected intensity.

7. The position estimation apparatus according to any one of claims 1 to 6, wherein
   the target object is a line on a road surface.

8. The position estimation apparatus according to claim 7, wherein
   the first estimation unit estimates an end point position of the line on the road surface.

9. The position estimation apparatus according to claim 8, wherein
   the first estimation unit estimates the end point position using the overlapping point cloud data in a case where the end point position is within a predetermined region in the overlapping point cloud data.

10. The position estimation apparatus according to any one of claims 1 to 9, wherein
    the overlapping unit generates the overlapping point cloud data in which the point cloud data has been overlapped a number of times corresponding to a velocity of the moving body.

11. The position estimation apparatus according to any one of claims 1 to 10, further comprising:

a second estimation unit that estimates the position of the moving body using an estimation result of the position of the target object by the first estimation unit.

12. A position estimation method executed by a computer, the position estimation method comprising:

a first acquisition step of acquiring point cloud data at a plurality of timings obtained by a sensor mounted on a moving body;
a second acquisition step of acquiring movement information of the moving body;
an overlapping step of generating overlapping point cloud data in which the point cloud data at the plurality of timings has been overlapped on the basis of the movement information; and
a first estimation step of estimating a position of a target object using the overlapping point cloud data.

13. A program causing a computer to execute the position estimation method according to claim 12.

FIG. 1

10

| FIRST ACQUISITION UNIT | 120 |

| SECOND ACQUISITION UNIT | 140 |

| OVERLAPPING UNIT | 160 |

| FIRST ESTIMATION UNIT | 180 |

# FIG. 2

Top view

Side view

FIG. 3A

IN CASE WHERE RESOLUTION OF SENSOR IS HIGH

30

41

LAST LINE IN WHICH WHITE
LINE HAS BEEN DETECTED

FIRST LINE IN WHICH WHITE LINE
HAS NOT BEEN DETECTED

IT IS DETERMINED THAT BROKEN
LINE END POINT IS PRESENT
BETWEEN THESE LINES

FIG. 3B

IN CASE WHERE RESOLUTION OF SENSOR IS LOW

30

41

IT IS UNCLEAR WHERE DASHED
LINE END POINT IS

# FIG. 4

```
                    ┌─────────────┐
                    │    START    │
                    └─────────────┘
                           │
                           ▼
          ┌──────────────────────────────┐
          │                              │
          │    FIRST ACQUISITION STEP    │ ⟋ S101
          │                              │
          └──────────────────────────────┘
                           │
                           ▼
          ┌──────────────────────────────┐
          │                              │
          │    SECOND ACQUISITION STEP   │ ⟋ S102
          │                              │
          └──────────────────────────────┘
                           │
                           ▼
          ┌──────────────────────────────┐
          │                              │
          │       OVERLAPPING STEP       │ ⟋ S103
          │                              │
          └──────────────────────────────┘
                           │
                           ▼
          ┌──────────────────────────────┐
          │                              │
          │     FIRST ESTIMATION STEP    │ ⟋ S104
          │                              │
          └──────────────────────────────┘
                           │
                           ▼
                    ┌─────────────┐
                    │     END     │
                    └─────────────┘
```

FIG. 5

10

160

FIRST ACQUISITION UNIT → IN-FIRST-REGION DATA EXTRACTION UNIT → INTENSITY CORRECTION UNIT → OVERLAPPING POINT CLOUD DATA GENERATION UNIT — 161

120    110    150

COORDINATE CONVERSION UNIT — 163    STORAGE UNIT (MEMORY) — 165

SECOND ACQUISITION UNIT

140

HIGH-INTENSITY POINT EXTRACTION UNIT → PRINCIPAL COMPONENT ANALYSIS UNIT → FIRST IDENTIFI-CATION UNIT

181    183    185

RELIABILITY INFORMATION GENERATION UNIT — 187

SECOND IDENTIFI-CATION UNIT — 189

SECOND ESTIMATION UNIT

190

180

FIG. 6

```
                        ( START )
                            │
                            ▼
  S10  ┌──────────────────────────────────────────┐
       │   IDENTIFY FIRST ESTIMATED SELF-POSITION   │
       └──────────────────────────────────────────┘
                            │
                            ▼
  S20  ┌──────────────────────────────────────────┐
       │   CALCULATE PREDICTED SELF-POSITION        │
       │   FROM PREVIOUS ESTIMATED SELF-POSITION    │
       └──────────────────────────────────────────┘
                            │
                            ▼
  S30            ◇ HAS MAP AROUND PREDICTED ◇        Yes
              ◇ SELF-POSITION BEEN ACQUIRED? ◇ ──────────┐
                            │                            │
                            │ No                         │
                            ▼                            │
  S40  ┌──────────────────────────────────────────┐     │
       │   ACQUIRE LANDMARK MAP AROUND              │     │
       │   PREDICTED SELF-POSITION                  │     │
       └──────────────────────────────────────────┘     │
                            │◄───────────────────────────┘
                            ▼
  S50  ┌──────────────────────────────────────────┐
       │   ACQUIRE INFORMATION OF WHITE LINE FROM   │
       │   MAP AND CALCULATE MEASUREMENT PREDICTION │
       │   VALUE OF WHITE LINE                      │
       └──────────────────────────────────────────┘
                            │
                            ▼
  S60         ◇ IS POINT CLOUD DATA ACQUIRED? ◇   No
                            │
                            │ Yes
                            ▼
  S70  ┌──────────────────────────────────────────┐
       │   PERFORM DETECTION OF WHITE LINE BY       │
       │   POINT CLOUD OVERLAP AND GENERATION       │
       │   OF RELIABILITY INFORMATION               │
       └──────────────────────────────────────────┘
                            │
                            ▼
  S80  ┌──────────────────────────────────────────┐
       │   CORRECT PREDICTED SELF-POSITION          │
       └──────────────────────────────────────────┘
                            │
                            ▼
  S90           ◇ IS PROCESS ENDED? ◇   No
                            │
                            │ Yes
                            ▼
                        ( END )
```

FIG. 7

FIG. 8

WHITE LINE

REFLECTION INTENSITY *I*

THRESHOLD VALUE

*x*

OBJECT OTHER THAN WHITE LINE

WHITE LINE

REFLECTION INTENSITY CORRECTION VALUE *I'*

THRESHOLD VALUE

OBJECT OTHER THAN WHITE LINE

*x*

# FIG. 9

FIG. 10

TIME
$t(k-3)$

AFTER COORDINATE CONVERSION

$t(k-2)$

AFTER COORDINATE CONVERSION

$t(k-1)$

AFTER COORDINATE CONVERSION

$t(k)$

AFTER COORDINATE CONVERSION

POINT CLOUD OVERLAP

FIG. 11

FIG. 12

FIG. 13

EP 4 495 549 A1

FIG. 14

28

FIG. 15

FIG. 16

FIG. 17

EIGENVALUE $\lambda_1$ OF
FIRST PRINCIPAL
COMPONENT AXIS

EIGENVALUE $\lambda_2$ OF
SECOND PRINCIPAL
COMPONENT AXIS

COORDINATES
OF POSITION OF
WHITE LINE IN
HORIZONTAL
DIRECTION: $L_y$

FIRST PRINCIPAL
COMPONENT
AXIS $v_1$

POSITION OF
CENTER OF
GRAVITY OF
EXTRACTED
POINT CLOUD

ORIENTATION
OF WHITE LINE

COORDINATES OF BROKEN
LINE END POSITION OF
WHITE LINE: $L_x$

20

FIG. 18

FIG. 19

FIG. 20

```
          ┌──────────┐
          │  START   │
          └────┬─────┘
               │
               ▼
┌─────────────────────────────────┐
│  EXTRACT POINT CLOUD IN FIRST REGION │ ─── S701
└─────────────────┬───────────────┘
                  │
                  ▼
┌─────────────────────────────────┐
│    CORRECT REFLECTION INTENSITY  │ ─── S702
└─────────────────┬───────────────┘
                  │
                  ▼
┌─────────────────────────────────┐
│   PERFORM COORDINATE CONVERSION  │ ─── S703
│          AND OVERLAPPING         │
└─────────────────┬───────────────┘
                  │
                  ▼
┌─────────────────────────────────┐
│  EXTRACT POINT WITH HIGH REFLECTION │ ─── S704
│    INTENSITY FROM OVERLAPPING    │
│            POINT CLOUD           │
└─────────────────┬───────────────┘
                  │
                  ▼
┌─────────────────────────────────┐
│   DETECT END POINT OF WHITE LINE │ ─── S705
│  AND CALCULATE END POINT DETECTION │
│            RELIABILITY           │
└─────────────────┬───────────────┘
                  │
                  ▼
┌─────────────────────────────────┐
│ CALCULATE HORIZONTAL POSITION AND │ ─── S706
│ ORIENTATION OF WHITE LINE AND CALCULATE │
│   HORIZONTAL POSITION DETECTION  │
│ RELIABILITY AND ORIENTATION DETECTION │
│            RELIABILITY           │
└─────────────────┬───────────────┘
                  │
                  ▼
          ┌──────────┐
          │   END    │
          └──────────┘
```

## INTERNATIONAL SEARCH REPORT

| International application No. |
| --- |
| **PCT/JP2023/008792** |

| A. | CLASSIFICATION OF SUBJECT MATTER |
| --- | --- |

*G01C 21/20*(2006.01)i; *G01S 17/89*(2020.01)i
FI: G01C21/20; G01S17/89

According to International Patent Classification (IPC) or to both national classification and IPC

| B. | FIELDS SEARCHED |
| --- | --- |

Minimum documentation searched (classification system followed by classification symbols)

G01C21/20; G01S17/89

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2020-46427 A (BAIDU ONLINE NETWORK TECHNOLOGIES (BEIJING) CO., LTD.) 26 March 2020 (2020-03-26) paragraphs [0019], [0030]-[0034], [0066], fig. 2 | 1-13 |
| Y | JP 2018-55222 A (NISSAN MOTOR CO., LTD.) 05 April 2018 (2018-04-05) paragraphs [0012], [0014], [0028], fig. 1, 4 | 1-13 |
| Y | JP 2020-165985 A (PIONEER ELECTRONIC CORP.) 08 October 2020 (2020-10-08) paragraph [0044], fig. 4 | 6 |
| Y | JP 2020-170293 A (IHI AEROSPACE CO., LTD.) 15 October 2020 (2020-10-15) paragraphs [0025], [0034], fig. 1, 2 | 10 |

☐ Further documents are listed in the continuation of Box C.   ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/008792**

| Patent document cited in search report | | | Publication date (day/month/year) | Patent family member(s) | Publication date (day/month/year) |
|---|---|---|---|---|---|
| JP | 2020-46427 | A | 26 March 2020 | US 2020/0088858 A1 paragraphs [0018], [0029]-[0033], [0064], fig. 2 EP 3627181 A1 entire text, all drawings CN 109345596 A entire text, all drawings | |
| JP | 2018-55222 | A | 05 April 2018 | (Family: none) | |
| JP | 2020-165985 | A | 08 October 2020 | (Family: none) | |
| JP | 2020-170293 | A | 15 October 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2018212302 A
- WO 2019189098 A

- JP 2022039388 A